# EUROPEAN PATENT SPECIFICATION

(11) **EP 3 402 046 B1**
(45) Date of publication and mention of the grant of the patent: **24.03.2021**
(21) Application number: 17382262.8
(22) Date of filing: 10.05.2017
(51) Int. Cl.: H02K 1/27, H02K 1/28

(54) **PERMANENT MAGNET MODULES**
PERMANENTMAGNETMODULE
MODULES À AIMANTS PERMANENTS

(43) Date of publication of application: 14.11.2018
(73) Proprietor: GE Renewable Technologies Wind B.V., 4817 PA Breda (NL)
(72) Inventor: Bueno de Santiago, Adrian, 08005 Barcelona (ES); Urresty, Julio César, 08029 Barcelona (ES); Keller, Stefan, 08005 Barcelona (ES)
(74) Representative: de Rooij, Mathieu Julien

(56) References cited:
- EP-A1- 2 075 898
- EP-A1- 2 555 385
- EP-A1- 2 658 090
- EP-A2- 1 777 795
- WO-A2-2012/034713
- JP-A- 2013 070 572

## Description

The present disclosure relates to permanent magnet modules for a rotor, and more particularly to permanent magnet modules that are especially suitable for a generator rotor of a wind turbine.

### BACKGROUND

Electrical machines having a rotor carrying permanent magnets are known. They are generally deemed to be reliable and require less maintenance than other topologies.

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation is normally transmitted through a rotor shaft to a generator, either directly ("directly driven") or through the use of a gearbox. This way, the generator can produce electricity which can be supplied to the electrical grid.

Particularly for offshore wind turbines, direct drive systems employing permanent magnets are usually chosen. Such a direct drive wind turbine generator may have e.g. a diameter of 6 - 8 meters and a length of e.g. 2 - 3 meters. Hundreds of magnets may need to be attached, e.g. by screwing or gluing, to the circumference of the rotor. This manufacturing process can be cumbersome.

Furthermore, if one or more magnets are damaged and need to be replaced, the access to these magnets can be complicated (especially with large size generators), such that maintenance can become very expensive.

This size and type of generator is not limited to offshore applications and not even to the technical field of wind turbines only. Generators of considerable dimensions may also be found e.g. in steam turbines and water turbines.

Examples of permanent magnet rotors that aim at dealing with the previous problem of the attachment of large numbers of magnets may comprise a plurality of permanent magnet modules arranged on an outer or inner circumference of a rim of the rotor.

A permanent magnet module may be defined as a unit having a plurality of permanent magnets, such that the plurality of magnets can be mounted and unmounted together. Such a module may have a module base with a shape suitable for housing a plurality of permanent magnets. The magnets may be fixed to the base in a diversity of manners. The base may be configured to be fixed to a rotor rim in such a way that the plurality of magnets are fixed together to the rotor rim through the module base. The use of permanent magnet modules may facilitate the formation of a generator rotor.

Irrespective of whether the permanent magnets are grouped in modules or not, the magnets are normally arranged so as to cause magnetic flux that follows a path that crosses an air-gap between the rotor and a stator in such a manner that the stator is reached and the stator is influenced by the magnetic flux.

A large number of magnets is normally required, and also large amounts of fastening material/elements (e.g. wedges, screws, glue, welding, etc.) are needed to fix the magnets directly to the rotor rim or to corresponding module base. In configurations based on grouping the magnets in modules, further fastening elements may be required to fix the modules (i.e. module base with attached magnets) to the rotor rim.

Processing such large quantities of fastening material/elements may also complicate the assembly of the rotor and maintenance operations thereof. Another drawback may be that excessive extra material/elements may be present in the rotor in the sense that said material/elements are not needed for electromagnetic purposes, but only for fixation purposes. These extra material/elements may negatively affect the electromagnetic behavior of the rotor.

Other electrical machines of relatively large dimensions, such as electrical motors comprising large quantities of permanent magnets are also known in the context of e.g. driving compressors or pumps, or in traction or marine applications. These large electrical motors may present similar problems to those described before in relation to generators

EP1777795 A2 discloses a pole assembly for a rotor, the pole assembly includes a permanent magnet pole including at least one permanent magnet block, a plurality of laminations including a pole cap mechanically coupled to the pole, and a plurality of laminations including a base plate mechanically coupled to the pole.

EP2658090 A1 describes a rotor magnet engagement assembly comprising a rotor base plate, a first magnetic interpole element, and a second magnetic interpole element. Z

Examples of the present disclosure at least partially resolve at least some of the previous problems.

### SUMMARY

In a first aspect, a permanent magnet module for a rotor of an electrical machine is provided. The permanent magnet module comprises a housing having a bottom configured to be mounted to a rim of the rotor, a first side wall, and a second side wall, and a permanent magnet component arranged inside the housing. The permanent magnet component has a radial magnetization with respect to an axis of rotation of the rotor, and the bottom extends laterally beyond the first and the second side walls.

Such a permanent magnet module is combined with suitable pole pieces to form a generator rotor. Because the bottom extends laterally beyond the first and second side walls, these portions of the bottom are clamped between the rotor rim and the pole pieces to mount the permanent magnet module to the rotor rim. An efficient fixation of the alternative permanent magnet module may be achieved in this manner.

### BRIEF DESCRIPTION OF THE DRAWINGS

Non-limiting examples of the present disclosure will be described in the following, with reference to the appended drawings, in which:

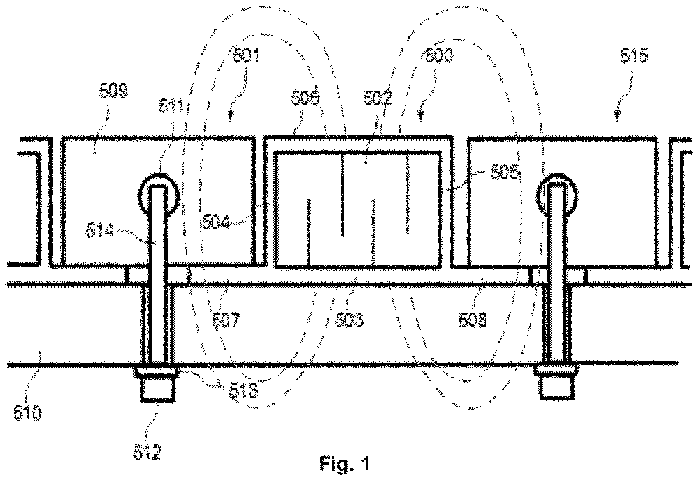

Fig. 1 is a schematic representation of a cross-sectional view of a permanent magnet module and its attachment to a rotor rim, according to an example.

### DETAILED DESCRIPTION OF EXAMPLES

Fig. 1 is a schematic representation of a cross-sectional view in a plane perpendicular to a rotational axis of the rotor of a permanent magnet module 500 and its attachment to a rotor rim 510, according to an example. The permanent magnet module 500 for a rotor of an electrical machine, comprises a housing having a bottom configured to be mounted to a rim 510 of the rotor, a first side wall 504, and a second side wall 505 and a permanent magnet component 502 arranged inside the housing. The permanent magnet component 502 has a radial magnetization with respect to an axis of rotation of the rotor. The bottom extends laterally beyond the first 504 and the second side wall 505.

The permanent magnet component may include one or more permanent magnets. Specifically, in some examples, the permanent magnet component may include a row of permanent magnets.

In this specific example, the bottom comprises a central bottom portion 503 defining a bottom wall of the housing, a first lateral bottom extension 507 extending from a first end of the central bottom portion, and a second lateral bottom extension 508 extending from a second end of the central bottom portion.

In the example of figure 1, the first and the second lateral bottom extensions 507 and 508 are substantially flat. The neighboring pole pieces 509, 515 may be substantially flat as well. In other examples, the first and second lateral bottom extensions may not be flat, and may include e.g. one or more protrusions, ridges or grooves. In such a case, the bottom of the neighboring pole pieces may be adapted mate with such lateral bottom extensions.

The housing of the permanent magnet module may further comprise a top wall. An aspect of the top wall is that a particularly good protection of the permanent magnet component may be provided against e.g. corrosion of magnets, loosening of magnets, etc.

In the example shown in Fig. 1, the top wall 506 is integrally formed with the first and second side walls 504, 505. In particular, the housing may be metallic.

In other examples, the top wall may comprise a non-magnetic cover fixed to corresponding upper portions of the first side wall and the second side wall.

In some examples, the permanent magnet component may be at least partially fixed in the housing component by a top wall and/or with adhesive and/or with resin and/or in a press-fitted manner. Resin maybe used to fill void spaces between the permanent magnet component and any of the walls of the housing component.

In a further aspect, a kit (of active elements) for a rotor of an electrical machine is provided. Such a kit comprises a permanent magnet module, and a pole piece. The pole piece 509, 515 comprises a metallic main body configured to be fixed to a rim 510 of the rotor in such a way that, in use, a portion of the bottom of the permanent magnet module is clamped between the pole piece and the rim of the rotor.

In the example shown in Fig. 1, the first lateral bottom extension 507 and the second lateral bottom extension 508 are clamped between the pole piece and the rim.

In the example shown in Fig. 1 the pole piece comprises an axial hole 511 adapted to receive a fixation rod, and the pole piece also comprises a plurality of radial holes. The plurality of radial holes, at different axial positions, may be drilled or otherwise provided in the pole piece 509. The fixation rod 511 may comprise a number of transverse through-holes, such that when the rod is inserted, the transverse through-holes are lined up with the radial holes of the pole piece 509. Bolts 514 with nuts 512 are inserted in these radial holes and may extend into and beyond the transverse holes of the rod 511, into an upper portion of the metallic main body 509. A compatible washer 513 may be used to distribute the load exerted by the nut 512 to the rotor rim 510.

In a further aspect, not covered by the claimed invention, method for mounting a permanent magnet module to a rotor rim is provided. The method includes positioning a permanent magnet module 500 on the rotor rim 510, and positioning a pole piece 515, or 509 on the rotor rim 510. The pole piece 509, 515 comprises an axial hole 511 adapted to receive a fixation rod, and a plurality of radial holes. The method further comprises inserting bolts 514 in the radial holes and tightening the bolts 512 to fix the bolts 514 to the fixation rod, and thereby clamping a portion of the permanent magnet module clamped between the pole piece and the rotor rim.

The assembly of the rotor and corresponding generator as well as subsequent maintenance operations may thus be simpler, cheaper, less time consuming, etc. due to e.g. the reduction of fastening material/elements and procedures. In the example of figure 1, the permanent magnet module has a housing having a bottom configured to be mounted to the rim of the rotor, a first side wall 504, and a second side wall 505, and a permanent magnet component arranged inside the housing. The permanent magnet component has a radial magnetization with respect to an axis of rotation of the rotor, and the bottom extends laterally beyond the first and the second side wall, wherein the portion of the permanent magnet module clamped between the pole piece and the rotor rim is a portion of the bottom.

In particular, the permanent magnet components of the permanent magnet modules may have the same radial magnetization direction. I.e. all permanent magnet components have their North and South at the same location, either closer to or further away from the stator arrangement.

In this configuration, magnetic flux between a metallic pole piece and a magnetic component is promoted. Magnetic flux lines are schematically indicated in Fig. 1.

Due to the radial magnetization of the permanent magnets, the magnetic flux that follows a path that extends beyond a top side of the pole pieces and permanent magnet modules, so as to reach corresponding windings on the stator side of the complete generator. These principles permit promoting magnetic fluxes between pole pieces and permanent magnets rather than between permanent magnets, with the pole pieces playing an additional as an anchor for the permanent magnet module. Hence, a generator rotor may be provided with smaller quantities of permanent magnets and smaller quantities of permanent magnet modules, in comparison with prior art configurations. The pole piece may have a substantially rectangular cross-section, such as shown in Fig. 1. In further examples, alternative shapes may be used for the pole pieces.

In a further aspect of the present disclosure, a rotor of an electrical machine comprising a plurality of permanent magnet modules and a plurality of pole pieces is provided. The pole pieces are mounted to a rim of the rotor, and the permanent magnet modules are mounted to the rim of the rotor by a first portion of the permanent magnet modules being clamped between a first neighboring pole piece of the plurality of pole pieces and the rotor rim and by a second portion of the permanent magnet modules being clamped between a second neighboring pole piece of the plurality of pole pieces and the rotor rim.

The permanent magnet modules comprise a housing having a bottom, a first side wall, and a second side wall, and a permanent magnet component arranged inside the housing, and the permanent magnet component has a radial magnetization with respect to an axis of rotation of the rotor.

In particular, all the permanent magnet modules may have the same radial magnetization.

In a further aspect, a rotor comprising a plurality of permanent magnet modules according to any of the examples disclosed herein, and a plurality of pole pieces comprising a metallic main body is provided. The pole pieces are mounted to a rim of the rotor, and each of the permanent magnet modules is mounted to the rim of the rotor by a first bottom portion of the permanent magnet modules being clamped between one pole piece of the plurality of pole pieces and the rim, and a second bottom portion of the permanent magnet module being clamped between another pole piece of the plurality of pole pieces and the rim.

In yet a further aspect, a generator comprising a rotor with permanent magnet modules and pole pieces according to any of the examples disclosed herein is provided. And in yet a further aspect, a wind turbine, and in particular, a direct drive wind turbine including such a generator is provided.

The housing component in any of the disclosed examples may be formed as a stack of metallic laminas, which may be advantageous in the sense that losses due to eddy currents may be reduced. The permanent magnet component may be housed in a fixed manner in an axial through-hole of the housing component, so that the aforementioned top wall is an integral part of the housing component. This may provide an even better protection of the magnets.

This written description has used examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application.

## Claims

1. A kit for a rotor of an electrical machine comprising a permanent magnet module (500) and a pole piece (501; 515), wherein the permanent magnet module (500) includes:
a housing having a bottom configured to be mounted to a rim (510) of the rotor, a first side wall (504), and a second side wall (505), the bottom extending laterally beyond the first (504) and the second side wall (505), and
a permanent magnet component (502) arranged inside the housing, the permanent magnet component having a radial magnetization with respect to an axis of rotation of the rotor; and wherein the pole piece (501; 515) includes:
a metallic main body (509) configured to be fixed to a rim (510) of the rotor in such a way that, in use, a portion of the laterally extending bottom of the permanent magnet module is clamped between the pole piece and the rim of the rotor; and
wherein the pole piece (501; 515) comprises an axial hole adapted to receive a fixation rod (511), and a plurality of radial holes, such that the pole piece (501; 515) can be fixed to a rotor rim by a plurality of bolts (514) inserted in the radial holes and fixed to the fixation rod (511).

2. The kit according to claim 1, wherein the bottom comprises a central bottom portion (503) defining a bottom wall of the housing, a first lateral bottom extension (507) extending from a first end of the central bottom portion, and a second lateral bottom extension (508) extending from a second end of the central bottom portion.

3. The kit according to claim 2, wherein the first and the second lateral bottom extensions (507, 508) are substantially flat.

4. The kit according to any of claims 1 - 3, wherein the housing comprises a top wall (506).

5. The kit according to claim 4, and the top wall (506) is integrally formed with the first and second side walls (504; 505).

6. The kit according to claim 5, wherein the housing is metallic.

7. The kit according to claim 4, wherein the top wall (506) comprises a non-magnetic cover fixed to corresponding upper portions of the first side wall (504) and the second side wall (505).

8. The kit according to any of claims 1 - 7, wherein the pole piece (501; 515) has a substantially rectangular cross-section.

9. A rotor comprising a plurality of kits according to any of claims 1 - 8, wherein
the pole pieces of the kits are mounted to a rim (510) of the rotor, and
each of the permanent magnet modules (500) of the kits is mounted to the rim (510) of the rotor by a first bottom portion of the permanent magnet modules being clamped between one pole piece of the kits and the rim, and a second bottom portion of the permanent magnet module being clamped between another pole piece of the kits and the rim, wherein
the pole pieces (501; 515) are fixed to a rotor rim by a plurality of bolts (514) inserted in the radial holes and fixed to the fixation rod (511).

10. The rotor according to claim 9, wherein the permanent magnet components of the permanent magnet modules have the same radial magnetization direction.

11. A generator comprising the rotor of any of claims 9 - 10.

12. A direct drive wind turbine including the generator according to claim 11.

## Patentansprüche

1. Kit für einen Rotor einer elektrischen Maschine, umfassend ein Permanentmagnetmodul (500) und ein Polstück (501; 515), wobei das Permanentmagnetmodul (500) einschließt:
ein Gehäuse, aufweisend einen Boden, der konfiguriert ist, an einem Rand (510) des Rotors montiert zu werden, eine erste Seitenwand (504) und eine zweite Seitenwand (505), wobei sich der Boden seitlich über die erste (504) und die zweite Seitenwand (505) erstreckt, und
eine Permanentmagnetkomponente (502), die innerhalb des Gehäuses angeordnet ist, wobei die Permanentmagnetkomponente eine radiale Magnetisierung in Bezug auf eine Drehachse des Rotors aufweist; und wobei das Polstück (501; 515) einschließt:
einen metallischen Hauptkörper (509), der konfiguriert ist, an einem Rand (510) des Rotors befestigt zu werden, sodass im Gebrauch ein Abschnitt des sich seitlich erstreckenden Bodens des Permanentmagnetmoduls zwischen dem Polstück und dem Rand des Rotors festgeklemmt wird; und
wobei das Polstück (501; 515) ein axiales Loch umfasst, das ausgelegt ist, eine Befestigungsstange (511) aufzunehmen, und eine Vielzahl von Löchern, sodass das Polstück (501; 515) durch eine Vielzahl von Schrauben (514), die in die radialen Löcher eingeführt und an der Befestigungsstange (511) befestigt sind, an einem Rotorrand befestigt werden kann.

2. Kit nach Anspruch 1, wobei der Boden einen mittleren Bodenabschnitt (503) umfasst, der eine Bodenwand des Gehäuses definiert, eine erste seitliche Bodenverlängerung (507), die sich von einem ersten Ende des mittleren Bodenabschnitts erstreckt, und eine zweite seitliche Bodenverlängerung (508), die sich von einem zweiten Ende des mittleren Bodenabschnitts erstreckt.

3. Kit nach Anspruch 2, wobei die erste und die zweite seitliche Bodenverlängerung (507, 508) im Wesentlichen flach sind.

4. Kit nach einem der Ansprüche 1 bis 3, wobei das Gehäuse eine obere Wand (506) umfasst.

5. Kit nach Anspruch 4, und die obere Wand (506) ist in der ersten und der zweiten Seitenwand (504; 505) integriert gebildet.

6. Kit nach Anspruch 5, wobei das Gehäuse metallisch ist.

7. Kit nach Anspruch 4, wobei die obere Wand (506) eine nichtmagnetische Abdeckung umfasst, die an entsprechenden oberen Abschnitten der ersten Seitenwand (504) und der zweiten Seitenwand (505) befestigt ist.

8. Kit nach einem der Ansprüche 1 bis 7, wobei das Polstück (501; 515) einen im Wesentlichen rechteckigen Querschnitt aufweist.

9. Rotor, umfassend eine Vielzahl von Kits nach einem der Ansprüche 1 bis 8, wobei
die Polstücke der Kits an einem Rand (510) des Rotors montiert sind und jedes der Permanentmagnetmodule (500) der Kits am Rand (510) des Rotors durch einen ersten Bodenabschnitt der Permanentmagnetmodule, der zwischen einem Polstück der Kits und dem Rand festgeklemmt ist, und einen zweiten Bodenabschnitt des Permanentmagnetmoduls montiert ist, der zwischen einem weiteren Polstück der Kits und dem Rand festgeklemmt ist, wobei die Polstücke (501; 515) an einem Rotorrand durch eine Vielzahl von Schrauben (514) befestigt sind, die in die radialen Löcher eingeführt und an der Befestigungsstange (511) befestigt sind.

10. Rotor nach Anspruch 9, wobei die Permanentmagnetkomponenten der Permanentmagnetmodule dieselbe radiale Magnetisierungsrichtung aufweisen.

11. Generator, umfassend den Rotor nach einem der Ansprüche 9 bis 10.

12. Windkraftanlage mit Direktantrieb, die den Generator nach Anspruch 11 einschließt.

## Revendications

1. Kit pour rotor d'une machine électrique comprenant un module à aimants permanents (500) et une pièce polaire (501 ; 515), dans lequel le module à aimants permanents (500) comprend :
un boîtier ayant un fond conçu pour être monté sur un rebord (510) du rotor, une première paroi latérale (504) et une seconde paroi latérale (505), le fond s'étendant latéralement au-delà de la première (504) et de la seconde paroi latérale (505), et
un composant aimant permanent (502) disposé à l'intérieur du boîtier, le composant aimant permanent ayant une aimantation radiale par rapport à un axe de rotation du rotor ; et dans lequel la pièce polaire (501 ; 515) comprend :
un corps principal métallique (509) conçu pour être fixé à un rebord (510) du rotor de sorte que, lors de l'utilisation, une partie du fond s'étendant latéralement du module à aimants permanents soit serrée entre la pièce polaire et le rebord du rotor ; et
dans lequel la pièce polaire (501 ; 515) comprend un trou axial conçu pour recevoir une tige de fixation (511), et une pluralité de trous radiaux, de sorte que la pièce polaire (501 ; 515) puisse être fixée à un rebord de rotor par une pluralité de boulons (514) insérés dans les trous radiaux et fixés à la tige de fixation (511).

2. Kit selon la revendication 1, dans lequel le fond comprend une partie inférieure centrale (503) définissant une paroi inférieure du boîtier, une première extension inférieure latérale (507) s'étendant depuis une première extrémité de la partie inférieure centrale, et une seconde extension inférieure latérale (508) s'étendant depuis une seconde extrémité de la partie inférieure centrale.

3. Kit selon la revendication 2, dans lequel les première et seconde extensions inférieures latérales (507, 508) sont sensiblement plates.

4. Kit selon l'une quelconque des revendications 1 à 3, dans lequel le boîtier comprend une paroi supérieure (506).

5. Kit selon la revendication 4, et la paroi supérieure (506) est formée d'un seul tenant avec les première et seconde parois latérales (504 ; 505).

6. Kit selon la revendication 5, dans lequel le boîtier est métallique.

7. Kit selon la revendication 4, dans lequel la paroi supérieure (506) comprend un couvercle non magnétique fixé aux parties supérieures correspondantes de la première paroi latérale (504) et de la seconde paroi latérale (505).

8. Kit selon l'une quelconque des revendications 1 à 7, dans lequel la pièce polaire (501 ; 515) a une section transversale sensiblement rectangulaire.

9. Rotor comprenant une pluralité de kits selon l'une quelconque des revendications 1 à 8, dans lequel
les pièces polaires des kits sont montées sur un rebord (510) du rotor, et chacun des modules à aimants permanents (500) des kits est monté sur le rebord (510) du rotor par une première partie inférieure des modules à aimants permanents serrés entre une pièce polaire des kits et le rebord, et une seconde partie inférieure du module à aimants permanents serrée entre une autre pièce polaire des kits et le rebord, dans lequel
les pièces polaires (501 ; 515) sont fixées à un rebord de rotor par une pluralité de boulons (514) insérés dans les trous radiaux et fixés à la tige de fixation (511).

10. Rotor selon la revendication 9, dans lequel les composants aimants permanents des modules à aimants permanents ont la même direction d'aimantation radiale.

11. Générateur comprenant le rotor selon l'une quelconque des revendications 9 à 10.

12. Éolienne à entraînement direct comprenant le générateur selon la revendication 11.
